# FASCICULE DE BREVET EUROPEEN

(11) **EP 0 665 188 B1**
(45) Date de publication et mention de la délivrance du brevet: **16.04.1997**
(21) Numéro de dépôt: 95400176.4
(22) Date de dépôt: 26.01.1995
(51) Int. Cl.: C01B 37/00

(54) **Procédé d'obtention de zéolithes contenant du titane**
Verfahren zur Herstellung titanhaltiger Zeolithe
Process for making zeolites containing titanium

(30) Priorité: 28.01.1994 FR 9400978
(43) Date de publication de la demande: 02.08.1995
(73) Titulaire: ELF AQUITAINE, 92400 Courbevoie (FR)
(72) Inventeur: Tuel, Alain, F-69100 Villeurbanne (FR); Teissier, Rémy, F-69340 Francheville (FR)
(74) Mandataire: Boillot, Marc

(56) Documents cités:
- FR-A- 2 471 950
- APPLIED CATALYSIS, vol.58, 1990, AMSTERDAM,NL pages L1 - L4 J.S. REDDY ET AL.
- JOURNAL OF CATALYSIS, vol.130, 1991, DULUTH, MN US pages 1 - 8 A. THANGARAJ ET AL.
- ZEOLITES, vol.12, no.8, Novembre/Décembre 1992, STONEHAM,MA US pages 943 - 950 A. THANGARAJ ET AL.

## Description

La présente invention a pour objet un procédé de préparation de zéolithes dont une partie du silicium est substituée par du titane.

Les zéolithes de type MFI dont une partie des atomes de silicium est substituée par des atomes de titane sont des produits connus décrits en particulier dans le brevet américain USP 4 410 501 ; ces zéolithes sont désignées par l'appellation TS-1. Conformément au brevet américain précité les zéolithes TS-1 sont préparées par réaction en phase aqueuse, entre 130 et 200°C, sous pression autogène, d'une source de silicium (orthosilicates d'alkyle, silice colloïdale, silicates alcalins par exemple) avec une source d'oxyde de titane consistant en un dérivé hydrolysable du titane (TiCl₂, TiOCl₂, titanates d'alkyles) en présence d'une base azotée telle qu'un hydroxyde d'ammonium quaternaire, en l'absence d'ions alcalins. Dans ce procédé on a préconisé comme sources préférées de silicium et de titane le silicate et le titanate de tétraéthyle ; l'hydroxyde de tétrapropylammonium (TPAOH) représente la base convenant le mieux à la mise en oeuvre du procédé. Les zéolithes TS-1 obtenues par ce procédé répondent à la formule générale:

xTiO₂ (1-x)SiO₂

dans laquelle x est un nombre entier ou fractionnaire supérieur à 0 et inférieur ou égal à 0,025.

Des zéolithes de type MEL dans lesquelles une partie du silicium est remplacée par du titane (zéolithes TS-2) ont été préparées par un procédé analogue utilisant l'hydroxyde de tétrabutylammonium comme agent structurant (cf. : J.S. REDDY et al, Appl.Catal.58 page 1 (1990)).

Ces titanosilicalites de type MFI ou MEL se sont rapidement révélés être d'excellents catalyseurs dans de nombreuses réactions en chimie organique et en particulier pour l'oxydation de composés organiques au moyen de l'eau oxygénée. Cependant, il s'est avéré que l'activité catalytique des zéolithes TS-1 est affectée par la présence de titane extraréticulaire (cf. : U.ROMANO et al Chim.Ind. (Milan) 72 p.610 (1990); T.TATSUMI et al J.Chem. Soc. Chem. Commun. p. 476 (1990)). Cette présence résulte de la précipitation de TiO2 par hydrolyse prématurée de la source de titane dans les conditions de la réaction, en particulier lorsqu'on fait appel à l'orthotitanate de tétraéthyle très facilement hydrolysable à atmosphère ambiante. Afin d'éviter cette précipitation et d'augmenter la teneur des titanosilicalites en titane intraréticulaire, A.THANGARAJ et al, J. CATAL. (1991) vol. 130 p. 1-8 ; ZEOLITHES vol. 12 p. 943 (1992), ont proposé de remplacer l'orthotitanate de tétraéthyle par un composé moins hydrolysable ; à cet effet ils ont préconisé l'utilisation du titanate de tétrabutyle en solution dans l'alcool isopropylique anhydre et de modes opératoires particuliers pour la mise en oeuvre des réactifs. Selon eux le rapport molaire Si/Ti des titanosilicalites ainsi obtenues aurait été abaissé jusqu'à une valeur voisine de 10, résultat par ailleurs contesté par certains auteurs (cf. : R.MILLINI et al J.Catalysis 137 p.497 (1992)).

Un autre inconvénient des procédés précités réside dans la nécessité de recourir à la mise en oeuvre d'agents structurants exempts d'ions alcalins ou alcalino-terreux afin d'éviter la formation de titanates alcalins ou alcalino-terreux qui sont inactifs dans la réaction de formation de la zéolithe. Ceci implique un traitement des solutions aqueuses commerciales d'hydroxydes d'ammonium quaternaires, préalablement à leur utilisation, par exemple par électrodialyse.

En définitive les procédés utilisés jusqu'ici présentent des inconvénients qui compliquent leur mise en oeuvre industrielle et le besoin se fait sentir de mettre à la disposition de l'industrie un procédé qui ne soit pas soumis aux contraintes d'utilisation d'un vecteur anhydre de la source de titane et d'élimination des ions alcalins de l'agent structurant.

La présente invention se propose précisément de mettre à la disposition de l'industrie un procédé de fabrication de zéolithes contenant du titane, exempt des inconvénients des procédés antérieurs.

A cet effet, un premier objectif que poursuit la présente invention vise à supprimer la nécessité de recourir à l'emploi d'un vecteur anhydre pour ajouter la source de titane dans le milieu réactionnel. Un second objectif de la présente invention vise à éviter l'hydrolyse rapide de la source de titane lors de sa mise en contact avec l'agent structurant. Un troisième objectif réside dans la mise au point d'un procédé ne nécessitant pas la mise en oeuvre d'un hydroxyde d'ammonium quaternaire exempt d'ions alcalins.

La présente invention a donc pour objet un procédé d'obtention de zéolithes dans lesquelles une partie des atomes de silicium du réseau est remplacée par des atomes de titane, par réaction hydrothermale d'une source de silicium tétravalent avec une source de titane tétravalent, en présence d'un agent structurant organique, caractérisé en ce que la source de titane est le tétrafluorure de titane.

On a constaté que TiF₄ présente une excellente résistance à l'hydrolyse en atmosphère humide dans les conditions normales et que dès lors il n'est pas nécessaire de prendre des précautions particulières pour sa mise en oeuvre ; en outre, placé dans une solution aqueuse alcaline à température ambiante TiF₄ ne donne pas lieu à la précipitation de TiO₂. Il n'est donc plus nécessaire de recourir à un véhicule anhydre pour le mettre en oeuvre ou de prendre des précautions pour éviter son hydrolyse en cours de manipulation. Enfin il ne donne pas lieu à la formation de titanates alcalins lorsque l'agent structurant contient des ions alcalins. Cependant, malgré cette relative stabilité à l'hydrolyse, TiF₄ permet dans les conditions habituelles de la réaction hydrothermale, l'obtention de zéolithes dont la teneur en titane peut être mieux maîtrisée.

Comme source de silicium on peut faire appel aux dérivés du silicium utilisés habituellement tels que : les silices finement divisées sous forme d'hydrogels, d'aérogels ou de suspensions colloïdales ; les esters siliciques hydrolysables comme les orthosilicates d'alkyle de formule Si(OR)₄ dans laquelle R représente un radical alkyle comportant de un à quatre atomes de carbone (radicaux méthyle, éthyle, propyles, butyles). On fait appel de préférence à l'orthosilicate de tétraéthyle.

L'agent structurant mis en oeuvre dans le procédé selon la présente invention est choisi parmi ceux proposés antérieurement et notamment parmi les hydroxydes de tétraalkylammonium dans lesquels les groupes alkyles comportent de 1 à 4 atomes de carbone; on fait appel de préférence aux hydroxydes de tétrapropylammonium et de tétrabutylammonium. Contrairement aux procédés antérieurs il n'est pas nécessaire de recourir à des hydroxydes d'ammonium quaternaires débarrassés des ions alcalins qu'ils contiennent. Il est par conséquent possible d'utiliser des solutions aqueuses commerciales d'hydroxydes d'ammonium quaternaire. On ne sortirait toutefois pas du cadre de la présente invention en utilisant des agents structurants exempts d'ions alcalins.

Les conditions de la réaction hydrothermale sont celles habituellement utilisées. Le procédé se déroule en deux phases. Au cours d'une première phase on prépare un mélange réactionnel aqueux contenant au moins une source de silicium, l'agent structurant et le tétrafluorure de titane. Ce mélange peut être maintenu à une température comprise entre environ 15°C et environ 50°C et pendant un temps suffisant pour procèder à l'hydrolyse de la source de silicium ; la durée de cette phase dépend de la température choisie. En général une durée comprise entre environ 10 mn et 2 heures convient bien. Le pH du milieu réactionnel est de préférence supérieur à 10 ; un pH de 10 à 12 convient bien. Le mode d'addition des réactifs ne revêt aucun caractère critique ; ainsi, le tétrafluorure de titane peut être ajouté au milieu aqueux contenant la source de silicium avant ou après addition de l'agent structurant, et dans ce dernier cas avant ou après avoir procédé à l'hydrolyse de la source de silicium. Le tétrafluorure de titane peut être ajouté au milieu d'hydrolyse soit sous forme de poudre soit sous forme d'une suspension dans un liquide vecteur. Compte-tenu de sa stabilité à l'hydrolyse à température ambiante, on peut utiliser l'eau comme liquide vecteur.

Au cours de la deuxième phase, on réalise la cristallisation de la zéolithe par chauffage de la masse réactionnelle provenant de la première phase sous pression autogène, à une température allant de 120 à 200°C et, de préférence, de 160 à 190°C. La durée de la phase de cristallisation dépend des conditions de la réaction ; en général cette durée est comprise entre 1 et 7 jours. Lorsqu'on utilise comme source de silicium un silicate d'alkyle, on procède à l'élimination de l'alcool formé au cours de l'hydrolyse par distillation à pression normale ou sous pression réduite, avant de réaliser la phase de cristallisation.

Les quantités de dérivés du silicium et de TiF₄ exprimées en moles peuvent varier dans de larges limites en fonction de la composition désirée pour la zéolithe, c'est-à-dire du rapport Si/Ti recherché. Ces quantités peuvent être voisines de la stoechiométrie de la réaction pour la composition visée ou s'en écarter sensiblement. En général la quantité de TiF₄ exprimée en moles par mole de dérivés du silicium et en particulier par mole d'orthosilicate d'alkyle peut être comprise dans un intervalle d'environ 0,005 à environ 0,2 et, de préférence, d'environ 0,05 à environ 0,15.

La quantité d'agent structurant utilisée dans le présent procédé, exprimée en moles par mole de dérivé du silicium et notamment d'orthosilicate d'alkyle peut être comprise dans un intervalle d'environ 0,1 à environ 2 et de préférence d'environ 0,2 à environ 0,6.

La quantité d'eau présente dans le milieu réactionnel n'est pas critique et peut varier dans de larges limites. En général une quantité d'eau comprise dans un intervalle d'environ 5 à environ 100 moles et, de préférence, d'environ 20 à environ 50 moles par mole de dérivé du silicium convient bien.

Le solide obtenu à la fin de la réaction est séparé du milieu réactionnel par filtration, lavé à l'eau, séché à température supérieure ou égale à 100°C puis calciné à une température supérieure ou égale à 500°C pour éliminer l'agent structurant. Lorsque l'agent structurant utilisé contient des ions alcalins, il est préférable de soumettre la zéolithe obtenue à un traitement acide de façon à éliminer les ions alcalins qu'elle contient. A cet effet un simple lavage par une solution aqueuse suffit ; on peut alors faire appel à une solution aqueuse d'un acide minéral fort, par exemple à une solution d'acide chlorhydrique.

Le procédé selon l'invention permet d'obtenir les zéolithes de type MFI (zéolithes TS-1) ou de type MEL (zéolithes TS-2) selon la nature de l'agent structurant mis en oeuvre.

Le produit ainsi obtenu présente les caractéristiques spectrales des zéolithes TS-1 ou TS-2. Ainsi, le spectre de diffraction des rayons X, le spectre infra-rouge et le spectre RMN du silicium 29 obtenu par rotation à l'angle magique, présentent les bandes caractéristiques de la présence d'un hétéroatome dans le réseau cristallin que présentent les zéolithes de type MFI ou MEL. La maille élémentaire de ces zéolithes répond à la formule :

Si₍₉₆₋ₓ₎ Tix O₁₉₂

dans laquelle x, qui représente le nombre d'atomes de titane présents dans la maille élémentaire, peut prendre toute valeur de l'intervalle 0,0001 à 2 et, de préférence, de 0,001 à 2.

Les zéolithes obtenues par le procédé de l'invention sont des catalyseurs connus utilisés en synthèse organique. Ainsi elles conviennent tout particulièrement bien comme catalyseurs dans des réactions d'oxydation mettant en oeuvre l'eau oxygénée et parmi lesquelles on peut citer, à titre non limitatif, l'hydroxylation des composés aromatiques tels que les phénols et les éthers de phénols ; l'ammoxydation des cétones (par exemple de la cyclohexanone).

Les exemples suivants, donnés à titre non limitatif, illustrent l'invention et montrent comment elle peut être mise en pratique.

### EXEMPLE 1

Dans un ballon de 250 ml équipé d'un dispositif de chauffage et d'un système d'agitation, on charge 25 ml de silicate d'éthyle et 40 ml d'une solution aqueuse d'hydroxyde de tétrapropylammonium à 1 mole par litre, exempte d'ions alcalins. On met l'agitation en marche et maintient le contenu du ballon pendant 30 mn à la température ambiante ; on y rajoute alors 40 ml d'eau distillée puis on porte la température du mélange à 80°C et maintient ainsi pendant 2 h sous agitation pour chasser l'éthanol formé. On coupe alors le chauffage et on refroidit le contenu du ballon à 35°C puis on ajoute 0,45 g de TiF₄ au gel de silice ainsi obtenu ; le gel prend une coloration laiteuse. L'agitation est poursuivie 5 mn puis le contenu du ballon est transvasé dans un récipient de 250 ml, résistant à la pression, pourvu d'un revêtement intérieur en TEFLON, équipé d'un dispositif de chauffage et d'un système d'agitation. On porte le contenu du réacteur à 170°C en 1 h sous agitation (300 rotations par mn) puis on maintient dans ces conditions pendant 2 jours. Le solide blanc qui a précipité pendant la réaction est filtré puis lavé 5 fois avec 250 ml d'eau distillée à chaque fois puis essoré et séché par chauffage à 120°C pendant 12 h. Il est ensuite calciné à 500°C pendant 10 h pour éliminer l'hydroxyde de tétrapropylammonium .

On a obtenu de cette façon 5,43 g d'un produit blanc dont la teneur pondérale en titane est de 1,45 % et la teneur en fluor de 0,093 %. Ce produit (désigné ci-après TS-1(F)) présente le spectre de diffraction des rayons X caractéristique d'un produit cristallisé et d'une silicalite de type MFI. Son spectre infra-rouge comporte une bande à 960 cm⁻¹ caractéristique des titanosilicalites. Son spectre UV est dépourvu des bandes caractéristiques de la présence de TiO₂ extra-réticulaire.Le rapport molaire Si/Ti de TS-1(F) est de 54.

### ESSAI COMPARATIF

A titre d'essai comparatif, on a préparé une titanosilicalite en opérant selon le procédé décrit dans le brevet US n° 4 410 501 : dans ballon de 100 ml équipé d'un système d'agitation, d'un dispositif de chauffage et d'une ampoule de coulée, on charge 25 ml d'orthosilicate d'éthyle et 0,45 ml de titanate de tétraéthyle. On agite le contenu du ballon à température ambiante pendant 10 mn puis on lui ajoute, en 10 mn, sous forte agitation, 40 ml d'une solution à 1 mole par litre d'hydroxyde de tétrapropylammonium exempt d'ions alcalins. Le mélange réactionnel est maintenu sous agitation à température ambiante pendant 30 mn puis on lui ajoute 40 ml d'eau distillée et on le porte à 80°C pendant 3 h. Le liquide incolore ainsi obtenu est transvasé dans un autoclave comportant un revêtement intérieur en TEFLON dans lequel on le maintient à 170°C sous agitation et sous pression autogène pendant 3 jours.

Après refroidissement de la masse réactionnelle, cette dernière est filtrée et le produit solide récupéré est lavé 5 fois avec 250 ml d'eau distillée à chaque fois puis séché à 110°C. pendant 12 h ; le produit sec est ensuite calciné sous air par chauffage à 550°C. pendant 10 h pour éliminer l'hydroxyde de tétrapropylammonium.

Le produit solide obtenu de cette façon est soumis aux mêmes déterminations que le produit obtenu selon l'exemple 1. Il présente les mêmes caractéristiques spectrales ; sa teneur pondérale en titane est de 1,33 % ce qui représente un rapport molaire Si/Ti de 59.

### EXEMPLE 2

On a procédé comme à l'exemple 1 mais après avoir remplacé l'hydroxyde d'ammonium quaternaire exempt d'ions alcalins par une solution d'hydroxyde de tétrapropylammonium commerciale contenant 0,1 % en poids d'ions Na et 0,32 % en poids d'ions K. Le produit calciné est lavé 1 fois avec 100 ml d'une solution à 1 mole/l d'acide chlorhydrique pour éliminer les ions alcalins. On a obtenu dans ces conditions 5,22 g d'un produit dont la teneur en Ti est de 1,39 % en poids et la teneur en fluor de 0,083 % en poids et qui présente les mêmes caractéristiques spectrales que le produit de l'exemple 1. Le rapport molaire Si/Ti du produit obtenu est de 56.

On a testé l'activité catalytique de la zéolithe TS-1(F) obtenue comme décrit ci-avant pour l'hydroxylation du phénol en hydroquinone et pyrocatéchine. A cet effet, on a chargé dans un réacteur en verre équipé d'un système d'agitation et d'un dispositif de chauffage par circulation d'eau thermostatée :
- 10 g de phénol (soit 106 millimoles) en solution dans 15 ml de méthanol ;
- 0,5 g de TS-1(F) obtenue selon le procédé décrit ci-avant ; puis on a porté le contenu du réacteur à 70°C. sous agitation et on a ajouté 2,4 ml d'eau oxygénée à 30 % en poids (21,2 millimoles). On a maintenu ensuite ces conditions pendant 2 h. On refroidit ensuite la masse réactionnelle à 20°C puis on dose l'eau oxygénée non transformée par l'iodure de potassium en milieu acide et les diphénols formés par chromatographie en phase gazeuse. On a constaté que la réaction a conduit à la formation d'hydroquinone (HQ) et de pyrocatéchine (PC) mais pas à celle de résorcine. Les résultats obtenus ont été les suivants :
- taux de transformation de H₂O₂ : 70%
- rendement en diphénols par rapport à l'eau oxygénée transformée : 92 %
- rapport HQ/HQ+PC : 0,67.

### EXEMPLES 3 à 4

On a opéré comme à l'exemple 1 mais en faisant varier la quantité de TiF₄ de façon à obtenir des silicalites à teneur variée en titane.Les résultats obtenus figurent dans le tableau ci-après :

| EX. | TiF₄ g | Si/Ti chargé en moles | PRODUIT OBTENU | | | |
|---|---|---|---|---|---|---|
| | | | quantité en g | teneur en Ti % en poids | teneur en fluor % en poids | Si/Ti en moles |
| 3 | 0,43 | 31 | 4,97 | 1,65 | 0,037 | 47 |
| 4 | 0,76 | 19 | 5,17 | 1,7 | 0,125 | 45 |

Les produits ainsi obtenus présentent un spectre de diffraction X comportant les bandes caractéristiques de la structure MFI et d'un solide cristallisé. Le spectre IR présente la bande à 960 cm-1 caractéristique des titanosilicalites. Son spectre UV est dépourvu des bandes caractéristiques de la présence de TiO₂ extra-réticulaire.

## Revendications

1. Procédé d'obtention de zéolithes dans lesquelles une partie des atomes de silicium du réseau est remplacée par des atomes de titane, par réaction hydrothermale d'une source de silicium tétravalent avec une source de titane tétravalent en présence d'un agent structurant organique, caractérisé en ce que la source de titane est le tétrafluorure de titane.

2. Procédé d'obtention de zéolithes dans lesquelles une partie des atomes de silicium du réseau est remplacée par des atomes de titane selon la revendication 1 caractérisé en ce que la source de silicium est choisie dans le groupe formé par la silice finement divisée sous forme d'hydrogel, d'aérogel, ou de suspension colloïdale et les orthosilicates d'alkyles de formule générale :
Si(OR)₄
dans laquelle R représente un radical alkyle ayant de 1 à 4 atomes de carbone.

3. Procédé d'obtention de zéolithes dans lesquelles une partie des atomes de silicium du réseau est remplacée par des atomes de titane selon la revendication 2 caractérisé en ce que la source de silicium est l'orthosilicate de tétraéthyle.

4. Procédé d'obtention de zéolithes dans lesquelles une partie des atomes de silicium du réseau est remplacée par des atomes de titane selon l'une quelconque des revendications 1 à 3 caractérisé en ce que l'agent structurant est un hydroxyde de tétraalkylammonium dans lequel le radical alkyle comporte de 1 à 4 atomes de carbone.

5. Procédé d'obtention de zéolithes dans lesquelles une partie des atomes de silicium du réseau est remplacée par des atomes de titane selon la revendication 4 caractérisé en ce que l'agent structurant est l'hydroxyde de tétrapropylammonium.

6. Procédé d'obtention de zéolithes dans lesquelles une partie des atomes de silicium du réseau est remplacée par des atomes de titane selon la revendication 4 caractérisé en ce que l'agent structurant est l'hydroxyde de tétrabutylammonium.

7. Procédé d'obtention de zéolithes dans lesquelles une partie des atomes de silicium du réseau est remplacée par des atomes de titane selon l'une quelconque des revendications 1 à 6 caractérisé en ce que la quantité d'agent structurant exprimée en moles par mole de dérivé du silicium est comprise dans un intervalle de 0, 1 à 2 moles.

8. Procédé d'obtention de zéolithes dans lesquelles une partie des atomes de silicium du réseau est remplacée par des atomes de titane selon l'une quelconque des revendications 1 à 7 caractérisé en ce que la quantité de TiF₄ exprimée en moles par mole de dérivé du silicium est comprise dans un intervalle de 0,005 à 0,2.

9. Procédé d'obtention de zéolithes dans lesquelles une partie des atomes de silicium du réseau est remplacée par des atomes de titane selon l'une quelconque des revendications 1 à 8 caractérisé en ce que l'on procède dans une première étape à la préparation d'un mélange réactionnel contenant la source de silicium, de l'eau, l'agent structurant et la source de titane puis, dans une deuxième étape à la cristallisation du mélange réactionnel provenant de la première étape.

10. Procédé d'obtention de zéolithes dans lesquelles une partie des atomes de silicium du réseau est remplacée par des atomes de titane selon la revendication 9 caractérisé en ce que la température de la première phase est comprise dans un intervalle de 15 à 50°C.

11. Procédé d'obtention de zéolithes dans lesquelles une partie des atomes de silicium du réseau est remplacée par des atomes de titane selon la revendication 9 caractérisé en ce que la température de la phase de cristallisation est comprise dans un intervalle de 120 à 200°C.

12. Procédé d'obtention de zéolithes dans lesquelles une partie des atomes de silicium du réseau est remplacée par des atomes de titane selon l'une quelconque des revendications 1 à 11 caractérisé en ce que la quantité d'eau présente dans le milieu réactionnel exprimée en moles par mole de dérivé du silicium est comprise dans un intervalle de 20 à 50 moles.

13. Utilisation du procédé selon l'une quelconque des revendications 1 à 12 pour l'obtention de zéolithes de type MFI et MEL contenant du titane intraréticulaire.

## Claims

1. Process for obtaining zeolites in which some of the silicon atoms of the lattice are replaced by titanium atoms by the hydrothermal reaction of a source of tetravalent silicon with a source of tetravalent titanium in the presence of an organic structuring agent, characterised in that the source of titanium is titanium tetrafluoride.

2. Process for obtaining zeolites in which some of the silicon atoms of the lattice are replaced by titanium atoms according to Claim 1, characterised in that the silicon source is selected from the group consisting of finely divided silica in the form of hydrogel, aerogel or a colloidal suspension and the alkyl orthosilicates of the general formula:
Si(OR)₄
wherein R represents an alkyl radical having from 1 to 4 carbon atoms.

3. Process for obtaining zeolites in which some of the silicon atoms of the lattice are replaced by titanium atoms according to Claim 2, characterised in that the silicon source is tetraethyl orthosilicate.

4. Process for obtaining zeolites in which some of the silicon atoms of the lattice are replaced by titanium atoms according to any one of Claims 1 to 3, characterised in that the structuring agent is a tetraalkylammonium hydroxide in which the alkyl radical comprises from 1 to 4 carbon atoms.

5. Process for obtaining zeolites in which some of the silicon atoms of the lattice are replaced by titanium atoms according to Claim 4, characterised in that the structuring agent is tetrapropylammonium hydroxide.

6. Process for obtaining zeolites in which some of the silicon atoms of the lattice are replaced by titanium atoms according to Claim 4, characterised in that the structuring agent is tetrabutylammonium hydroxide.

7. Process for obtaining zeolites in which some of the silicon atoms of the lattice are replaced by titanium atoms according to any one of Claims 1 to 6, characterised in that the amount of structuring agent expressed in moles per mole of silicon derivative is in the range of from 0.1 to 2 moles.

8. Process for obtaining zeolites in which some of the silicon atoms of the lattice are replaced by titanium atoms according to any one of Claims 1 to 7, characterised in that the amount of TiF₄ expressed in moles per mole of silicon derivative is within the range of from 0.005 to 0.2.

9. Process for obtaining zeolites in which some of the silicon atoms of the lattice are replaced by titanium atoms according to any one of Claims 1 to 8, characterised in that, in a first step, a reaction mixture containing the silicon source, water, the structuring agent and the titanium source is prepared then, in a second step, the reaction mixture resulting from the first step is crystallised.

10. Process for obtaining zeolites in which some of the silicon atoms of the lattice are replaced by titanium atoms according to Claim 9, characterised in that the temperature of the first phase is within the range of from 15 to 50°C.

11. Process for obtaining zeolites in which some of the silicon atoms of the lattice are replaced by titanium atoms according to Claim 9, characterised in that the temperature of the crystallisation phase is within the range of from 120 to 200°C.

12. Process for obtaining zeolites in which some of the silicon atoms of the lattice are replaced by titanium atoms according to any one of Claims 1 to 11, characterised in that the amount of water present in the reaction medium expressed in moles per mole of silicon derivative is within the range of from 20 to 50 moles.

13. Use of the process according to any one of Claims 1 to 12 for obtaining zeolites of type MFI and MEL containing intrareticular titanium.

## Patentansprüche

1. Verfahren zur Herstellung von Zeolithen, bei denen ein Teil der Si-Atome des Gitters durch Ti-Atome ersetzt ist, durch hydrothermale Umsetzung einer Si(IV)-Quelle mit einer Ti(IV)-Quelle in Anwesenheit eines organischen Strukturierungsmittels, dadurch **gekennzeichnet,** daß die Ti-Quelle TiF₄ ist.

2. Verfahren zur Herstellung von Zeolithen, bei denen ein Teil der Si-Atome des Gitters durch Ti-Atome ersetzt ist, nach Anspruch 1, dadurch **gekennzeichnet,** daß die Si-Quelle ausgewählt wird aus der Gruppe, bestehend aus Kieselerde, die in Hydrogel- oder Aerogelform oder in Form einer kolloidalen Suspension fein verteilt ist, sowie den Alkylorthosilikaten der allgemeinen Formel
Si(OR)₄
worin R einen Alkylrest mit 1 bis 4 C-Atomen darstellt.

3. Verfahren zur Herstellung von Zeolithen, bei denen ein Teil der Si-Atome des Gitters durch Ti-Atome ersetzt ist, nach Anspruch 2, dadurch **gekennzeichnet,** daß die Si-Quelle Tetraethylorthosilikat ist.

4. Verfahren zur Herstellung von Zeolithen, bei denen ein Teil der Si-Atome des Gitters durch Ti-Atome ersetzt ist, nach einem der Ansprüche 1 bis 3, dadurch **gekennzeichnet,** daß das Strukturierungsmittel ein Tetraalkylammoniumhydroxid ist, in dem der Alkylrest 1 bis 4 C-Atome umfaßt.

5. Verfahren zur Herstellung von Zeolithen, bei denen ein Teil der Si-Atome des Gitters durch Ti-Atome ersetzt ist, nach Anspruch 4, dadurch **gekennzeichnet,** daß das Strukturierungsmittel Tetrapropylammoniumhydroxid ist.

6. Verfahren zur Herstellung von Zeolithen, bei denen ein Teil der Si-Atome des Gitters durch Ti-Atome ersetzt ist, nach Anspruch 4, dadurch **gekennzeichnet,** daß das Strukturierungsmittel Tetrabutylammoniumhydroxid ist.

7. Verfahren zur Herstellung von Zeolithen, bei denen ein Teil der Si-Atome des Gitters durch Ti-Atome ersetzt ist, nach einem der Ansprüche 1 bis 6, dadurch **gekennzeichnet,** daß die Menge an Strukturierungsmittel, ausgedrückt in Mol pro Mol Si-Derivat in einem Bereich zwischen 0, 1 und 2 Mol liegt.

8. Verfahren zur Herstellung von Zeolithen, bei denen ein Teil der Si-Atome des Gitters durch Ti-Atome ersetzt ist, nach einem der Ansprüche 1 bis 7, dadurch **gekennzeichnet,** daß die Menge an TiF₄, ausgedrückt in Mol pro Mol Si-Derivat, in einem Bereich zwischen 0,005 und 0,2 Mol liegt.

9. Verfahren zur Herstellung von Zeolithen, bei denen ein Teil der Si-Atome des Gitters durch Ti-Atome ersetzt ist, nach einem der Ansprüche 1 bis 8, dadurch **gekennzeichnet,** daß man auf einer ersten Stufe ein die Si-Quelle, Wasser, das Strukturierungsmittel und die Ti-Quelle enthaltendes Reaktionsgemisch herstellt und auf einer zweiten Stufe das aus der ersten Stufe stammende Reaktionsgemisch kristallisiert.

10. Verfahren zur Herstellung von Zeolithen, bei denen ein Teil der Si-Atome des Gitters durch Ti-Atome ersetzt ist, nach Anspruch 9, dadurch **gekennzeichnet,** daß die Temperatur der ersten Stufe in einem Bereich zwischen 15 und 50°C liegt.

11. Verfahren zur Herstellung von Zeolithen, bei denen ein Teil der Si-Atome des Gitters durch Ti-Atome ersetzt ist, nach Anspruch 9, dadurch **gekennzeichnet,** daß die Temperatur der Stufe der Kristallisation in einem Bereich zwischen 120 und 200°C liegt.

12. Verfahren zur Herstellung von Zeolithen, bei denen ein Teil der Si-Atome des Gitters durch Ti-Atome ersetzt ist, nach einem der Ansprüche 1 bis 11, dadurch **gekennzeichnet,** daß die Menge an Wasser im Reaktionsmedium, ausgedrückt in Mol pro Mol Si-Derivat, in einem Bereich zwischen 20 und 50 Mol liegt.

13. Verwendung des Verfahrens nach einem der Ansprüche 1 bis 12 zur Herstellung von Zeolithen vom MFI- und MEL-Typ, die innerhalb des Gitters angeordnetes Titan enthalten.
